# EUROPEAN PATENT SPECIFICATION

(11) **EP 1 114 675 B1**
(45) Date of publication and mention of the grant of the patent: **21.07.2010**
(21) Application number: 00204591.2
(22) Date of filing: 18.12.2000
(51) Int. Cl.: B01J 23/02, B01J 23/22, B01J 23/28, B01J 37/02, C01F 7/16, C10G 11/04

(54) **Catalyst for steam cracking reactions**
Dampfspaltungskatalysator
Catalyseur pour le vapocraquage

(30) Priority: 17.12.1999 IT MI992615
(43) Date of publication of application: 11.07.2001
(73) Proprietor: Polimeri Europa S.p.A., 20097 San Donato Milanese (MI) (IT); ENI S.p.A., 00144 Roma (IT)
(72) Inventor: Pollesel, Paolo, 20097 San Donato Milanese (Milan) (IT); Rizzo, Caterina, 20097 San Donato Milanese (Milan) (IT); Soprani, Massimo, 13011 Borgosesia (Vercelli) (IT); Paludetto, Renato, 20134 Milan (IT)
(74) Representative: De Gregori, Antonella

(56) References cited:
- EP-A- 0 662 505
- EP-A- 0 728 831
- DD-A- 243 647
- MOTOHIDE MATSUDA ET AL: "CONDUCTION PROPERTIES OF OXIDE ION CONDUCTOR CA12AL14O33 PREPARED WITH SOLUTION-SYNTHESIZED POWDERS" JOURNAL OF MATERIALS SCIENCE LETTERS, CHAPMAN AND HALL LTD. LONDON, GB, vol. 15, no. 11, 1 June 1996 (1996-06-01), pages 933-934, XP000588720 ISSN: 0261-8028

## Description

The present invention relates to a catalyst for steam cracking reactions.

Light olefins, particularly ethylene and propylene, are among the most important base chemical products for the whole petrochemical industry. Ethylene is fourth in the world among chemical products for production volume, with over 75 million tons per year; propylene is in thirteenth position. The industrial importance of ethylene can also be seen from the diffusion of the products deriving from it. About 80% of the total ethylene production is destined for the synthesis of thermoplastic polymers. Ethylene itself is a monomer for the production of polyethylene and is a raw material for other important monomers such as vinyl chloride, vinyl acetate and ethylene glycol. Some of these compounds also have a non-polymeric use, for example ethylene glycol is the main component of antifreeze fluids. Owing to the industrial importance of ethylene and propylene and considering the large production volumes, improvements in the production processes which cause even limited increases in the yields of light olefins, can produce considerable advantages from an economic point of view.

The main source of ethylene and propylene is steam cracking, a thermal process deriving from thermal cracking, in which a hydrocarbon charge is heated, in the presence of water vapor, in specific ovens to produce a gas stream rich in olefins. Over the years, attempts have been made to improve the process, concentrating in particular on furnace technology and with attempts to improve the thermal exchanges, decrease the residence times, optimize the geometry of the pyrolysis tubes.

A limited research activity has also been effected in a less conventional direction, in the search for a catalyst which is active in steam cracking reactions, to improve the yield to light olefins.

The use of catalysts for steam cracking reactions, however, has not been widely studied, even if various companies and research groups have occasionally worked in this area since the 70s'. In some cases a process has been defined but industrial applications are not known at the moment.

In many cases the catalyst tested contains a zeolitic component.

One of the main examples definitely relates to Asahi Chemical, which has filed various patents in the field, among which: JP-06/346062 (20/12/94); JP-06/199707 (19/07/94); JP-06/346063 (20/12/94); WO-96/1331 (09/05/96), can be mentioned.

Asahi claims a process for steam cracking in a circulating bed, which uses a catalyst based on ZSM-5 and ZSM-11 zeolites, charged with metals such as Fe, Mg and/or Ib metals, preferably Ag. This process partially increases the yield to ethylene, but the reaction is mainly directed towards the production of propylene and aromatics. Recent information (for example: "Ethylene via Catalytic Naphtha Cracking" PERP Report 96/97S12 - Chem Systems, September 1997) reveals that the process still has several problems of a technological nature to be solved, among which many aspects relating to the catalyst (activity, regeneration, duration), before it can be effectively commercialized.

SINOPEC (China) proposes a catalyst containing zeolite, in particular Y zeolite and zeolites with a pentasyl structure, with a high silicon content, containing P-Al, or p-Mg, or P-Ca (EP-909582). Another catalytic system based on zeolite was also set up by the University of Gent, in collaboration with Amoco: catalysts based on HZSM-5 zeolite containing P-Ga, increase the yield to propylene in the cracking of naphtha (W. De Hertog, G.F. Froment, M.P. Kaminsky, Proc. AIChE 1999 Spring National Meeting, 14-18 March 1999, Houston, U.S.A.); also in this case however the effects on ethylene, due to the acidic nature of the catalyst, are minimum.

Another type of catalysts studied for steam cracking reactions are calcium-aluminate compounds. These solids, unlike zeolites, increase the yields of light olefins without significantly varying the quantitative ratios between the main products; in this way an increase in the yield to both ethylene and propylene is obtained. Among calcium-aluminate materials, various mixtures have been proposed, in which some compounds prevail each time such as, for example, CaO·Al₂O₃ and CaO·2Al₂O₃, proposed by Nowak et al. (DD-243 647 of 1987) or the mayenite phase (12CaO.7Al₂O₃), indicated as prevalent compound by Lemonidou and Vasalos (A.A. Lemonidou, I.A. Vasalos, Applied Catalysis, 54, 1989 and A.A. Lemonidou, I.A. Vasalos, E.J. Hirschberg, R.J. Bertolacini, Industrial Engineering Chemistry Res., 28, 1989) of the University of Thessalonica, with the collaboration of Amoco.

We identified mayenite as the most effective crystalline phase, among calcium-aluminates, in steam cracking reactions; a method was therefore set up for obtaining this compound in pure form as described in a pending patent application.

Some authors have added metals to the calcium-aluminate catalysts to try and increase the performances of the catalytic systems. It can be seen from literature that various attempts have been made with alkaline metals (in particular potassium) mainly to reduce the formation of coke. The presence of alkaline metals does in fact contribute to limiting coke production, but also causes a significant increase in other undesired by-products, such as carbon monoxides, which reach yields of various percentage points; during the tests moreover, there is also a loss of significant quantities of potassium (see: R. Mukhopadhyay, D. Kunzru, Industrial Engineering Chemistry Res., 32, 1993).

We have found that the activity of calcium-aluminate compounds in steam cracking reactions can be increased by the addition of transition metals such as molybdenum and vanadium. These elements, when added in the form of oxides to the base catalyst, do in fact allow an additional increase in the yield to the main desired products, i.e. ethylene and propylene, to be obtained. The negative effects on the formation of by-products such as coke and carbon monoxides are limited; in fact, these by-products, in tests with virgin naphtha, do not exceed 1% by weight of yield with respect to the staring charge even in the presence of the catalyst modified with Mo or V.

The catalyst for steam cracking reactions, object of the present invention, consists of crystalline calcium aluminates having a molar ratio CaO/Al₂O₃ ranging from 1/6 to 3 and of molybdenum and/or vanadium oxides,
wherein the molybdenum oxide, expressed as MoO₃, or the vanadium oxide, expressed as V₂O₅, or the sum of said two oxides, is in a quantity ranging from 0.5 to 10%, preferably from 0.8 to 5% by weight.

The process for the preparation of the catalyst is characterized in that it comprises the following steps:
- dissolution of a salt containing molybdenum or vanadium in an appropriate solvent;
- impregnation of the calcium aluminate present in granular form, by the addition of said aluminate to the molybdenum or vanadium salt solution;
- elimination of the solvent;
- drying at a temperature ranging from 100 to 150°C of the solid precursor product;
- calcination of the solid precursor product at a temperature ranging from 500 to 650°C for at least 4 hours.

The solvent depends on the salt selected: it is preferably selected from water, alcohol, ether, acetone; water is more preferably used to dissolve the molybdenum salt and ethanol for the vanadium salt.

The crystalline calcium aluminates which form the catalyst should be selected from those having a molar ratio CaO/Al₂O₃ ranging from 1/6 to 3, more preferably equal to 12/7 or equal to 3.

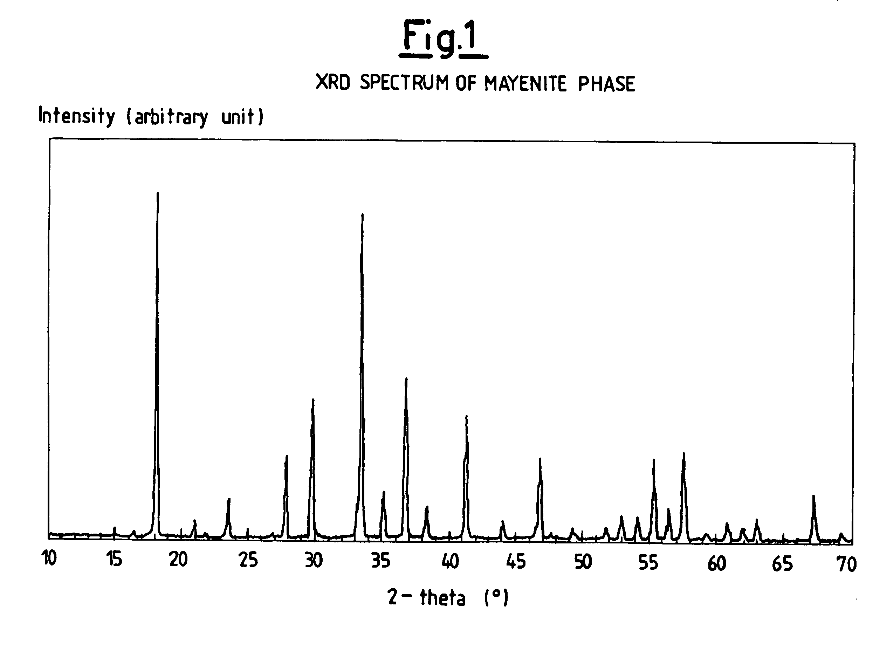

The same applicant in a pending Italian patent application has claimed a pure mayenite having the general formula

12CaO·7Al₂O₃

which has, in its calcined form, an X-ray diffraction spectrum, registered by means of a vertical goniometer equipped with an electronic impulse count system and using CuKa radiation (λ = 1.54178 Å), containing the main reflections indicated in Table 1 (wherein d indicates the interplanar distance) and in figure 1.

This pure mayenite can be advantageously selected as calcium aluminate of which the catalyst consists according to the invention.

The process for the preparation of the pure mayenite described above comprises the following steps:
- dissolution of salts containing calcium and aluminum with water;
- complexing of the dissolved salts by means of polyfunctional organic hydroxyacids;
- drying of the solution resulting from the complexing in order to obtain a solid precursor product;
- calcination of the solid precursor product at a temperature ranging from 1300 to 1400°C_{,} preferably ranging from 1330 to 1370°C, for at least 2 hours, preferably for at least 5 hours.

The polyfunctional organic hydroxyacids can be selected from citric acid, maleic acid, tartaric acid, glycolic acid and lactic acid: citric acid is preferred.

The salts containing calcium are preferably selected from calcium acetate and calcium nitrate.

Aluminum nitrate is the preferred salt containing aluminum.

It is advisable for the preparation process to be carried out with a molar ratio polyfunctional hydroxyacids/salts containing calcium and alumina ranging from 1.5 to 1.

A further object of the invention relates to the process for the production of light olefins by means of the steam cracking reaction of hydrocarbon charges selected from naphtha, in particular virgin-naphtha, kerosene, gas oil, alone or mixed with each other, in the presence of a catalyst according to the invention, which is effected preferably operating at a temperature ranging from 720 to 800°C, at a pressure ranging from 1.1 to 1.8 absolute Ate and for a contact time ranging from 0.07 to 0.2 sec.

Some examples are provided (1-5) for a better illustration of the invention, but which should not be considered as limiting the scope of the present invention.

### EXAMPLE 1

### Preparation of pure mayenite.

A synthesis method in homogeneous phase was used.

This method comprises the use of citric acid or polyfunctional hydroxyacids which have the function of complexing metal salts in aqueous solution. After dehydration of the aqueous solution an amorphous solid precursor is obtained, which, after thermal treatment at a high temperature, produces the desired product.

The main advantages of this technique are the following:
- homogeneous mixing on an atomic scale
- good stoichiometric control
- production of mixed oxides using commercial chemical products
- short process times

A solution of aluminum nitrate, 378.2 g of Al(NO₃)₃·9H₂O (1.008 moles) in 470 g of water was first added to a solution of calcium acetate, obtained by dissolving at room temperature 152.2 g of (CH₃COO)₂Ca·H₂O (0.864 moles) in 450 g of H₂O, followed by a solution of citric acid: 393.1 g (1.872 moles) in 375 g of water. The homogeneous solution obtained was dried by means of a spray-drier. The desired product 12CaO·7Al₂O₃ (Mayenite) was obtained in pure form after calcination at 1350°C for 5 h.

In order to obtain a catalyst formed by means of tableting, a lubricating agent (2 wt % of stearic acid) was added; after tableting, the catalyst was subjected to an additional calcination step.

The composition of the catalyst obtained was verified by means of X-ray diffractometry, which showed the presence of the single pure 12CaO·7Al₂O₃ phase.

(See Table 1 and figure 1 mentioned above).

### EXAMPLE 2

### Preparation: Mayenite (12CaO·7Al₂O₃) doped + (2% MoO₃)

0.86 g of ammonium heptamolybdate tetrahydrate (0.0049 moles) in 100 g of water were charged into a 250 cc flask. 35 g of granulated mayenite (20-40 mesh) were added to the solution. After 2 h, the product was dried and then calcined at 550°C for 5 h.

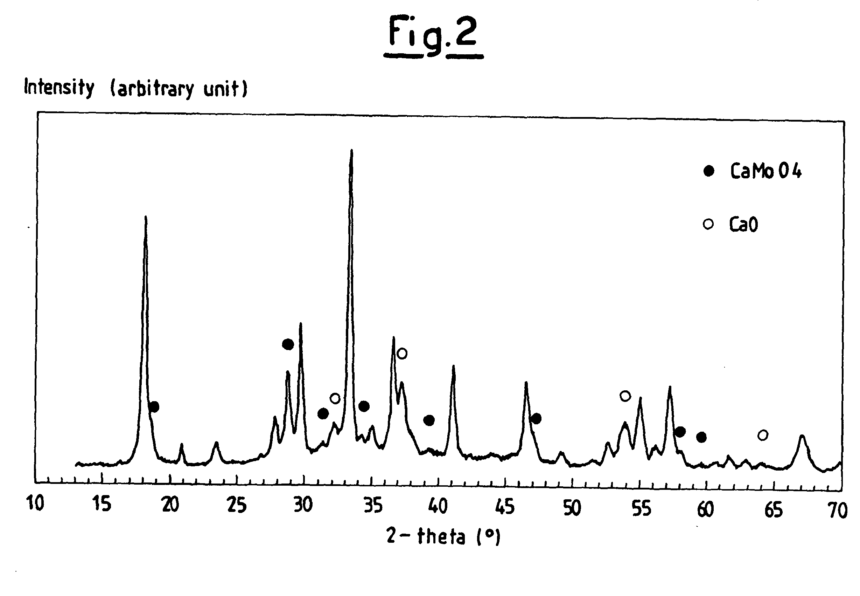

The composition of the catalyst obtained was verified by means of X-ray diffractometry (Table II and figure 2) from which it can be seen that the crystalline structure of the mayenite is not altered by the addition process of molybdenum.

Small quantities of CaO may be formed, which do not influence the activity of the catalyst.

### EXAMPLE 3

### Preparation: Mayenite (l2CaO·7Al₂O₃) doped + (2% V₂O₃)

2.68 g of vanadium(III) acetylacetonate (0.0077 moles) in 75 g of ethanol were charged into a 250 cc flask. 35 g of granulated mayenite (20-40 mesh) were added to the solution. After 2 h, the product was dried and then calcined at 550°C for 5 h.

### EXAMPLE 4

Steam cracking reaction effected in a laboratory pulse plant.
Operating conditions:
Charge = Virgin Naphtha
T = 775°C
H₂O/charge = 0.98 by weight
Residence time = 0.15 s
Time on Stream = 60 s

Table III indicates the data obtained with a calcium-aluminate catalyst prepared as described in Example 1, active in the steam cracking of virgin naphtha, compared with the results of the test effected with the same catalyst doped with molybdenum oxide and prepared as described in Example 2. It can be observed that the performance of the non-doped catalyst is surpassed with respect to yield to light olefins by the results obtained with the catalyst containing molybdenum.

The increase in yield to ethylene + propylene is 5.3% for the test with the doped catalyst with respect to the test with the non-doped catalyst.

### EXAMPLE 5

Steam cracking reaction effected in a laboratory plant in continuous with a fixed bed reactor having a diameter of 1/2".
Operating conditions:
Charge = Virgin Naphtha
T = 775°C
H₂O/charge = 0.8 by weight
Residence time = 0.1 s

Table IV provides a comparison between the results obtained in a fixed bed plant for the steam cracking of virgin naphtha in the presence of mayenite as such in the one case (Example 1) and in the presence of mayenite doped with vanadium oxide in the second case. The sample doped with v₂O₅ was prepared according to the method described in Example 3.

The results show how vanadium, added as oxide, also has a positive effect on the activity of the catalyst in cracking reactions, increasing the total yield of the more valuable products, ethylene and propylene.

**TABLE I**

| X-ray diffraction spectrum of the pure Mayenite phase | |
|---|---|
| 2θ (CuKα) (°) | d (Å) |
| 18.18 | 4.88 |
| 21.02 | 4.22 |
| 23.52 | 3.78 |
| 27.89 | 3.196 |
| 29.87 | 2.989 |
| 33.48 | 2.675 |
| 35.17 | 2.550 |
| 36.77 | 2.442 |
| 38.33 | 2.347 |
| 41.31 | 2.184 |
| 44.10 | 2.052 |
| 46.76 | 1.941 |
| 49.30 | 1.847 |
| 51.76 | 1.765 |
| 52.96 | 1.728 |
| 54.14 | 1.693 |
| 55.30 | 1.660 |
| 56.44 | 1.629 |
| 57.56 | 1.600 |
| 60.87 | 1.521 |
| 61.95 | 1.497 |
| 62.98 | 1.475 |
| 67.19 | 1.392 |
| 69.23 | 1.356 |

**TABLE II**

| X-ray diffraction spectrum of the sample consisting of Mayenite Ca₁₂Al₁₄O₃₃ and Powellite CaMoO₄. | | |
|---|---|---|
| 2θ (CuKα) (°) | d (Å) Mayenite | d (Å) Powellite |
| 18.18 | 4.88 | |
| 18.68 | | 4.75 |
| 21.02 | 4.22 | |
| 23.52 | 3.78 | |
| 27.89 | 3.196 | |
| 28.80 | | 3.097 |
| 29.87 | 2.989 | |
| 31.33 | | 2.853 |
| 33.48 | 2.675 | |
| 34.34 | | 2.609 |
| 35.17 | 2.550 | |
| 36.77 | 2.442 | |
| 38.33 | 2.347 | |
| 39.38 | | 2.286 |
| 39.95 | | 2.255 |
| 41.31 | 2.184 | |
| 44.10 | 2.052 | |
| 46.76 | 1.941 | |
| 47.11 | | 1.927 |
| 49.30 | 1.847 | |
| 51.76 | 1.765 | |
| 52.96 | 1.728 | |
| 54.14 | 1.693 | |
| 55.30 | 1.660 | |
| 56.44 | 1.629 | |
| 57.56 | 1.600 | |
| 58.05 | | 1.588 |
| 59.59 | | 1.550 |
| 60.87 | 1.521 | |
| 61.95 | 1.497 | |
| 62.98 | 1.475 | |
| 67.19 | 1.392 | |
| 69.23 | 1.356 | |

**TABLE III**

| Yield (w %) | 12CaO·7Al₂O₃ | 12CaO·7Al₂O₃ + 2% MoO₃ |
|---|---|---|
| Hydrogen | 1.16 | 1.57 |
| Methane | 12.65 | 11.43 |
| Ethylene | 26.08 | 26.97 |
| Ethane | 2.79 | 2.96 |
| Propylene | 15.30 | 16.63 |
| Propane | 0.40 | 0.42 |
| Butanes | 1.80 | 1.73 |
| Butenes + butadiene | 5.57 | 6.31 |
| CO + CO₂ | 0.17 | 0.51 |
| Tot. Gas | 65.92 | 68.52 |
| Coke | 0.11 | 0.50 |
| | | |
| Tot. Ethylene + Propylene | 41.38 | 43.59 |

**TABLE IV**

| Yield (w %) | 12CaO·7Al₂O₃ | 12CaO·7Al₂O₃ + 2% V₂O₅ |
|---|---|---|
| Hydrogen | 0.94 | 1.50 |
| Methane | 11.14 | 13.12 |
| Ethylene | 26.27 | 27.15 |
| Ethane | 2.52 | 3.50 |
| Propylene | 17.60 | 17.87 |
| Propane | 0.48 | 0.48 |
| Butanes | 2.04 | 1.45 |
| Butenes | 7.35 | 6.48 |
| Butadiene | 5.03 | 4.86 |
| CO + CO₂ | 0.03 | 0.20 |
| Tot. Gas | 73.4 | 76.6 |
| Coke | 0.4 | 0.5 |
| | | |
| Tot. Ethylene + Propylene | 43.87 | 45.02 |

## Claims

1. A catalyst for steam cracking reactions consisting of one or more crystalline calcium aluminates having a molar ratio CaO/Al₂O₃ ranging from 1/6 to 3 and of molybdenum and/or vanadium oxides
wherein the molybdenum oxide, expressed as MoO₃, or the vanadium oxide, expressed as V₂O₅, or the sum of said two oxides is in a quantity ranging from 0.5 to 10% by weight.

2. The catalyst according to claim 1, wherein the molybdenum oxide, expressed as MoO₃, or the vanadium oxide, expressed as V₂O₅, or the sum of said two oxides is in a quantity ranging from 0.8 to 5% by weight.

3. The catalyst according to claim 1 or 2, wherein the crystalline calcium aluminate has a molar ratio CaO/ Al₂O₃ equal to 12/7 or equal to 3.

4. The catalyst according to claim 3, wherein the crystalline calcium aluminate having a molar ratio CaO/Al₂O₃ equal to 12/7 is pure mayenite.

5. A process for the preparation of the catalyst according to one of the claims from 1 to 4, **characterized in that** it comprises the following steps:
- dissolution of a salt containing molybdenum or vanadium in an appropriate solvent;
- impregnation of the calcium aluminate present in granular form, by the addition of said aluminate to the molybdenum or vanadium salt solution;
- elimination of the solvent;
- drying at a temperature ranging from 100 to 150°C of the solid precursor product;
- calcination of the solid precursor product at a temperature ranging from 500 to 650°C for at least 4 hours.

6. The process according to claim 5, wherein the molybdenum salt is ammonium heptamolybdate tetrahydrate.

7. The process according to claim 5, wherein the vanadium salt is vanadium(III)acetylacetonate.

8. The process according to claim 5 for the preparation of the catalyst according to claim 4, wherein the pure mayenite is obtained by means of the following steps:
- dissolution of salts containing calcium and aluminum with water;
- complexing of the dissolved salts by means of polyfunctional organic hydroxyacids;
- drying of the solution resulting from the complexing in order to obtain a solid precursor product;
- calcination of the solid precursor product at a temperature ranging from 1300 to 1400°C for at least 2 hours.

9. The process according to claim 8, wherein the salts containing calcium are selected from calcium acetate and calcium nitrate, the salt containing aluminum is aluminum nitrate and the polyfunctional hydroxyacid is citric acid.

10. The process according to claim 8, wherein the molar ratio polyfunctional hydroxyacids/salts containing calcium and alumina ranges from 1.5 to 1.

11. A process for the production of light olefins by means of the steam cracking reaction of hydrocarbon charges selected from naphtha, kerosene, gas oil, alone or mixed with each other, in the presence of a catalyst according to one of the claims from 1 to 4, operating at a temperature ranging from 720 to 800°C, at a pressure ranging from 1.1 to 1.8 absolute Ate. and for a contact time ranging from 0.07 to 0.2 sec.

12. The process according to claim 10, wherein the naphtha is virgin naphtha.

## Patentansprüche

1. Katalysator für Steam-Cracking Reaktionen, der aus einem oder mehreren kristallinen Kalziumaluminat/en, das/die ein Molverhältnis CaO/Al₂O₃ in einem Bereich von 1/6 bis 3 aufweist/en, und aus Molybdän- und/oder Vanadiumoxiden besteht, wobei das Molybdänoxid, ausgedrückt als MoO₃, oder das Vanadiumoxid, ausgedrückt als V₂O₅, oder die Summe der genannten beiden Oxide in einer Menge in einem Bereich von 0,5 bis 10 Gew.-% vorliegt.

2. Katalysator nach Anspruch 1, wobei das Molybdänoxid, ausgedrückt als MoO₃, oder das Vanadiumoxid, ausgedrückt als V₂O₅, oder die Summe der genannten beiden Oxide in einer Menge in einem Bereich von 0,8 bis 5 Gew.-% vorliegt.

3. Katalysator nach Anspruch 1 oder 2, wobei das kristalline Kalziumaluminat ein Molverhältnis CaO/Al₂O₃ gleich 12/7 oder gleich 3 aufweist.

4. Katalysator nach Anspruch 3, wobei das kristalline Kalziumaluminat mit einem Molverhältnis CaO/Al₂O₃ gleich 12/7 reines Mayenit ist.

5. Verfahren für die Herstellung des Katalysators nach einem der Ansprüche 1 bis 4, **dadurch gekennzeichnet, dass** es die folgenden Schritte umfasst:
- Auflösen eines Salzes, das Molybdän oder Vanadium enthält, in einem geeignetem Lösungsmittel;
- Imprägnieren des Kalziumaluminats, das in einer granularen Form vorliegt, durch die Zugabe des genannten Aluminats zu der Molybdän- oder der Vanadiumsalzlösung;
- Eliminieren des Lösungsmittels;
- Trocknen des festen Precursor Erzeugnisses bei einer Temperatur in einem Bereich von 100 bis 150°C;
- Kalzinieren des festen Precursor Erzeugnisses bei einer Temperatur in einem Bereich von 500 bis 650°C für mindestens 4 Stunden.

6. Verfahren nach Anspruch 5, wobei das Molybdänsalz Ammoniumheptamolybdad Tetrahydrat ist.

7. Verfahren nach Anspruch 5, wobei das Vanadiumsalz Vanadium(III)acetylacetonat ist.

8. Verfahren nach Anspruch 5 für die Herstellung des Katalysators nach Anspruch 4, wobei das reine Mayenit mittels der folgenden Schritte erhalten wird:
- Auflösen der Salze, die Kalzium und Aluminium enthalten, mit Wasser;
- Komplexieren der aufgelösten Salze mittels polyfunktionaler organischer Hydroxysäuren;
- Trocknen der Lösung, die nach dem Komplexieren anfällt, um ein festes Precursor Erzeugnis zu erhalten;
- Kalzinieren des festen Precursor Erzeugnisses bei einer Temperatur in einem Bereich von 1300 bis 1400°C für mindestens 2 Stunden.

9. Verfahren nach Anspruch 8, wobei die Salze, die Kalzium enthalten, ausgewählt sind aus Kalziumacetat und Kalziumnitrat, das Salz, das Aluminium enthält, Aluminiumnitrat ist und die polyfunktionelle Hydroxysäure Zitronensäure ist.

10. Verfahren nach Anspruch 8, wobei das Molverhältnis polyfunktionale Hydroxysäure/Kalzium und Aluminium enthalten Salze in einem Bereich von 1,5 bis 1 liegt.

11. Verfahren für die Herstellung von leichten Olefinen mittels der Steam-Cracking Reaktion aus Kohlenwasserstoffchargen, die ausgewählt sind aus Naphtha, Kerosin, Diesel, alleine oder gemischt miteinander, in der Gegenwart eines Katalysators nach einem der Ansprüche 1 bis 4, das bei einer Temperatur in einem Bereich von 720 bis 800°C, bei einem Druck in einem Bereich von 1,1 bis 1,8 absoluter Atmosphäre und bei einer Kontaktzeit in einem Bereich von 0,07 bis 0,2 Sec betrieben wird.

12. Verfahren nach Anspruch 10, wobei das Naphtha Virgin Naphtha ist.

## Revendications

1. Catalyseur pour des réactions de craquage à la vapeur consistant en un ou plusieurs aluminates de calcium cristallins ayant un rapport molaire CaO/Al₂O₃ allant de 1/6 à 3 et en des oxydes de molybdène et/ou vanadium,
dans lequel l'oxyde de molybdène, exprimé par MoO₃, ou l'oxyde de vanadium, exprimé par V₂O₅, ou la somme desdits deux oxydes est dans une quantité allant de 0,5 à 10 % en poids.

2. Catalyseur selon la revendication 1, dans lequel l'oxyde de molybdène, exprimé par MoO₃, ou l'oxyde de vanadium, exprimé par V₂O₅, ou la somme desdits deux oxydes est dans une quantité allant de 0,8 à 5 % en poids.

3. Catalyseur selon la revendication 1 ou 2, dans lequel l'aluminate de calcium cristallin a un rapport molaire CaO/Al₂O₃ égal à 12/7 ou égal à 3.

4. Catalyseur selon la revendication 3, dans lequel l'aluminate de calcium cristallin ayant un rapport molaire CaO/Al₂O₃ égal à 12/7 est la mayenite pure.

5. Procédé de préparation du catalyseur selon l'une des revendications 1 à 4, **caractérisé en ce qu'**il comprend les étapes suivantes :
- la dissolution d'un sel contenant du molybdène ou du vanadium dans un solvant approprié ;
- l'imprégnation de l'aluminate de calcium présent sous forme granulaire, par l'addition dudit aluminate à la solution de sel de molybdène ou vanadium ;
- l'élimination du solvant ;
- le séchage à une température allant de 100 à 150 °C du produit précurseur solide ;
- la calcination du produit précurseur solide à une température allant de 500 à 650 °C pendant au moins 4 heures.

6. Procédé selon la revendication 5, dans lequel le sel de molybdène est l'heptamolybdate d'ammonium tétrahydrate.

7. Procédé selon la revendication 5, dans lequel le sel de vanadium est l'acétylacétonate de vanadium (III).

8. Procédé selon la revendication 5 pour la préparation du catalyseur selon la revendication 4, dans lequel la mayenite pure est obtenue au moyen des étapes suivantes :
- la dissolution de sels contenant du calcium et de l'aluminium avec de l'eau ;
- la complexation des sels dissous au moyen d'hydroxyacides organiques polyfonctionnels ;
- le séchage de la solution résultant de la complexation afin d'obtenir un produit précurseur solide ;
- la calcination du produit précurseur solide à une température allant de 1 300 à 1 400 °C pendant au moins 2 heures.

9. Procédé selon la revendication 8, dans lequel les sels contenant du calcium sont choisis parmi l'acétate de calcium et le nitrate de calcium, le sel contenant de l'aluminium est le nitrate d'aluminium, et l'hydroxyacide polyfonctionnel est l'acide citrique.

10. Procédé selon la revendication 8, dans lequel le rapport molaire hydroxyacides polyfonctionnels/sel contenant du calcium et de l'alumine va de 1,5à1.

11. Procédé de production d'oléfines légères au moyen de la réaction de craquage à la vapeur de charges d'hydrocarbure choisies parmi le naphta, le kérosène, le gasoil, seules ou mélangées les unes avec les autres, en présence d'un catalyseur selon l'une des revendications 1 à 4, fonctionnant à une température allant de 720 à 800 °C, à une pression allant de 1,1 à 1,8 Atm, absolu et pendant un temps de contact allant de 0,07 à 0,2 s.

12. Procédé selon la revendication 10, dans lequel le naphta est le naphta de première distillation.
